# EUROPEAN PATENT APPLICATION

(11) **EP 1 909 077 A1**
(43) Date of publication of application: **09.04.2008**
(21) Application number: 06020692.7
(22) Date of filing: 02.10.2006
(51) Int. Cl.: G01F 11/04, G01F 13/00, G01F 15/00, A01M 7/00, A01M 21/04

(54) **Liquid dispensing device**

(71) Applicant: Syngenta Participations AG, 4058 Basel (CH)
(72) Inventor: The designation of the inventor has not yet been filed
(74) Representative: Ward, Steven Paul

(57) **Abstract**

A liquid dispensing device for repeatedly dispensing a predetermined amount of liquid which is supplied to the device under pressure is claimed. The amount of liquid dispensed by the device is determined by a timer. The volume which is to be dispensed by the device can conveniently be adjusted by changing the setting of said timer. In a preferred embodiment the invention is suitable for dispensing a predetermined volume of liquid, preferably a solution of agricultural chemicals, for spot application of said chemicals.

## Description

The present invention relates to a liquid dispensing device suitable for repeatedly dispensing a predetermined amount of liquid which is supplied to the device under pressure, in which the amount of liquid dispensed by the device is determined by a timer.

One method for repeatedly applying a predetermined volume of liquid, such as solutions of agricultural chemicals to a plant, is to use a graduated beaker or a similar kind of container to measure the solution. This method allows for precise measurement of a liquid and allows the liquid to be applied topically, for example to the base of the plant, if desired. The advantage of this method is that the equipment is very inexpensive and that the volumes can readily be changed as required. The drawback of this method is that it is very time-consuming and that the operation of pouring a liquid from a heavy canister commonplace for agricultural chemicals into a beaker can lead to injury of the back, the lower lumbar region, the neck and the wrist. Furthermore there is a considerable risk of exposure to the agricultural chemicals as the pouring action can result in splashing.

Liquid dispensing devices which deliver a predetermined volume of liquid, typically solutions of agricultural chemicals, are known and are described, for example, in US 4,650,099 and US 4,821,927. These patents disclose liquid dispensing devices which deliver a liquid which is supplied to the device under pressure within a narrow range of predetermined volumes, typically from 1 to 20 ml. The principle used is that of positive displacement of the liquid which is essentially the same as the working of a simple syringe comprising of a plunger in a barrel. In a syringe the plunger is pulled back to load a liquid into the barrel. The liquid is then forced out of the barrel by actuating the plunger. In the liquid dispensing devices as described in US 4,650,099 and US 4,821,927, the pressure of the liquid forces back the plunger thus filling the barrel which is situated within the device. This action simultaneously compresses a spring. When the trigger of the device is actuated the compressed spring pushes the plunger thus forcing the liquid out of the barrel. These devices allow for precise measurement of the liquid and allow the liquid to be applied topically, for example to the base of the plant, if desired. Furthermore, they reduce the exposure to the agricultural chemicals as the device operates as a closed system until the liquid is dispensed. The drawback of these devices is that they are restricted to dispensing only small volumes of liquid. This is because the volume that can be dispensed under the action of positive displacement is limited to the size of the spring which in turn is limited to the pressure of the liquid supplied to the device. The pumps used in conventional knapsack sprayers cannot generate the pressures required for dispensing volumes greater than 20 ml. More powerful pumps are commercially available but are heavier and thus would introduce manual handling problems for the operator of such a liquid dispensing device. The operator would be likely to suffer injury to his back and to suffer from fatigue if required to carry a heavy pump on his back whilst applying an agricultural liquid to a field.

We have now invented a liquid dispensing device suitable for repeatedly dispensing a predetermined volume of liquid which is supplied to the device under pressure which overcomes the limitations imposed on the method and devices described above. In a preferred embodiment the device enables the operator to apply a predetermined volume of the liquid for spot application of agricultural chemicals. The amount of liquid dispensed by the device is determined by a timer. The volume which is to be dispensed by the liquid dispensing device of the preferred embodiment can conveniently be selected, typically volumes from about 10 to 1000 ml.

Thus, in one embodiment the invention provides a device for dispensing a predetermined amount of liquid which is supplied to the device under pressure, in which the amount of liquid dispensed by the device is determined by a timer. This can be contrasted with the devices described in US 4,650,099 and US 4,821,927 where the amount of liquid dispensed is determined by the volume of the barrel situated within the device. In a preferred embodiment the timer keeps an outlet valve open for a predetermined length of time thus determining the amount of liquid to be dispensed by the device.

In another embodiment the timer comprises a piston moving within a cylinder whose speed of movement from an opening position in which the outlet valve is open to a closing position in which it closes the outlet valve is controlled by a damping mechanism. The present invention uses a piston and cylinder assembly situated within the liquid dispensing device to act as a timer. The relevant time is the time that it takes the piston to move from one extreme position (the opening position) to the other extreme position (the closing position). In a preferred embodiment the damping mechanism is a liquid which is pumped by the piston through an orifice; conveniently the liquid used in the damping mechanism is the same liquid as is dispensed by the device. The presence of an orifice against with the piston has to pump the liquid has the effect that the movement of the piston from one extreme position (the opening position) to the other extreme position (the closing position) is hampered.

In a further embodiment the damping mechanism is adjustable so as to vary the damping effect. The amount of resistance to the movement of the piston from one extreme position (the opening position) to the other extreme position (the closing position) as the liquid is displaced from the cylinder can be adjusted by restricting the flow of the liquid displaced from the cylinder. This can be achieved by various means, for example by introducing a variable orifice (a throttle valve) at the end of the cylinder so that the flow of fluid from the cylinder is restricted. In a preferred embodiment the size of the orifice is adjustable so as to vary the damping effect.

In another embodiment the piston is biased towards the closing position by a biasing means. This can be achieved by various means, for example by introducing a spring into the piston and cylinder assembly. In a preferred embodiment the biasing means is a spring.

In a further embodiment the piston can be moved against the biasing means by liquid pressure so as to move it to the opening position. This allows the timer to be reset. Preferably, the liquid used to reset the timer can be the same liquid which is dispensed by the liquid dispensing device. In a preferred embodiment the piston can be moved against the biasing means by liquid pressure so as to move it to the opening position in which the pressure is that of the liquid supplied to the device.

The invention will now be illustrated by means of the following non-limiting embodiment.
Figure 1 is an axial section of the liquid dispensing device in its initial position. That is the position the device assumes if it is disconnected from a source of liquid under pressure.
Figure 2 is an axial section of the liquid dispensing device before discharge. This is the position the device assumes when it is connected to a source of liquid under pressure.
Figure 3 is an axial section of the liquid dispensing device during discharge. This is the position the device assumes when the trigger has been actuated.

Block 1 is a block of material, preferably made out of metal. In a preferred embodiment block 1 is of a flattened cylindrical shape. Reference is made to the elliptical aspect and the axial aspect of block 1. Cylinder 2 is a cavity located centrally in block 1. Inlet orifice 3 is a cavity located towards one of the elliptical aspects of block 1, Outlet orifice 4 is a cavity located towards the other elliptical aspect of block 1, preferably opposite to inlet orifice 3. The diameters of inlet orifice 3 and outlet orifice 4 are preferably the same. The diameters of inlet orifice 3 and outlet orifice 4 are preferably smaller than the diameter of cylinder 2. Piston orifice 5 is a cavity located in block 1 effectively extending beyond inlet orifice 3 so as to connect inlet orifice 3 with cylinder 2. The diameter of piston orifice 5 is preferably smaller than the diameter of inlet orifice 3. Cylinder 2 and outlet orifice 4 are not connected.

Inlet channel 6 is a cavity connecting inlet orifice 3 and outlet orifice 4 by circumventing cylinder 2 as shown in the figures above. Preferably inlet channel 6 is a U-shaped channel. Outlet channel 7 is another cavity connecting piston orifice 5 and outlet orifice 4 by circumventing cylinder 2, essentially mirroring inlet channel 6 as shown in the figures above. Preferably outlet channel 7 is a U-shaped channel. The diameters of inlet channel 6 and outlet channel 7 are preferably the same.

Cylinder 2, inlet orifice 3, outlet orifice 4, piston orifice 5, inlet channel 6 and outlet channel 7 are connected with each other and in the absence of any additional mechanical parts a liquid could move from one space to the other.

Piston 8 comprises four elements which are permanently attached to one another: piston head 8a, piston shaft 8b, piston spacer 8c and piston seal 8d. These are all blocks of material, preferably made out of metal. The diameter of piston head 8a is marginally smaller than the diameter of cylinder 2 so as to allow piston head 8a to move within cylinder 2 and at the same time to form a seal. The diameter of piston shaft 8b and piston seal 8d are marginally, smaller than the diameter of piston orifice 5 so as to allow these parts to move within piston orifice 5 and at the same time to form a seal when required. The diameter of piston spacer 8c is smaller than the diameter of piston shaft 8b and piston seal 8d.

Spring 9 is a helical element, preferably made out of metal. The diameter of spring 9 is slightly smaller than the diameter of cylinder 2 so as to allow spring 2 to fit securely into cylinder 2.

The concentric arrangement of the following elements is preferable for the efficient operation of the liquid dispensing device: cylinder 2, inlet orifice 3, outlet orifice 4, piston orifice 5, piston 8 and spring 9.

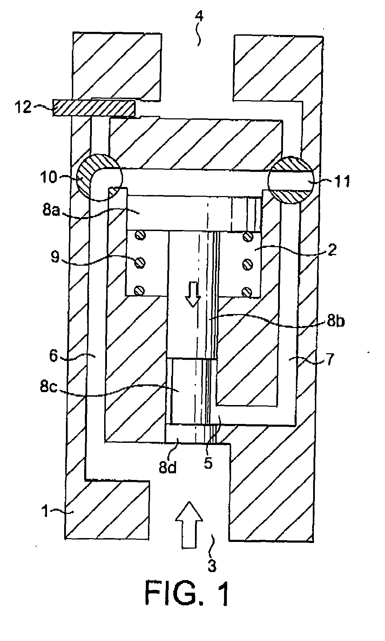

Trigger valve 10 is a "normally open" 3/2 valve which is situated in inlet channel 6 as shown in Figure 1. The part of inlet channel 6 that connects inlet orifice 3 with trigger valve 10 is referred to as front inlet channel 6a; the part of inlet channel 6 that connects trigger valve 14 with outlet orifice 4 is referred to as rear inlet channel 6b. In its initial state two of the ports of a "normally open" 3/2 valve are connected with each other and the other port is blocked until the valve is actuated. Here front inlet channel 6a is connected to cylinder 2 and rear inlet channel 6b is closed. When the 3/2 valve is actuated the connection changes. Here cylinder 2 is connected to rear inlet channel 6b and front inlet channel 6a is closed.

Outlet valve 11 is a "normally closed" 2/2 valve which is situated in outlet channel 7 as shown in Figure 1. The part of outlet channel 7 that connects inlet orifice 3 with outlet valve 11 is referred to as front outlet channel 7a; the part of outlet channel 7 that connects outlet valve 11 with outlet orifice 4 is referred to as rear outlet channel 7b. In its initial state port 1 and port 2 of a "normally closed" 2/2 valve are not connected to each other until the valve is actuated. Here front outlet channel 7a is not connected to rear outlet channel 7b. When the valve is actuated front outlet channel 7a and rear outlet channel 7b are connected. Trigger valve 10 and outlet valve 11 are switched in parallel. As long as the trigger is not engaged trigger valve 10 is open and outlet valve 11 is closed; conversely when the trigger is engaged trigger valve 10 is closed and outlet valve 11 is open.

Throttle valve 12 is located where rear inlet channel 6b connects with outlet orifice 4. Throttle valve 12 consists of a screw at the end of rear inlet channel 6b. When the screw is."loose'.' the flow of liquid through throttle valve 12 is essentially unhindered; conversely when the screw is tightened the flow of liquid through throttle valve 12 is restricted.

The relative arrangement of the moving parts of the liquid dispensing device, that is piston 8, spring 9, trigger valve 10 and outlet valve 11, in its initial position (that is the trigger is not engaged) is shown in Figure 1. In this position the flow of any liquid to outlet valve 11 is blocked by piston seal 8d and the setting of trigger valve 10 directs the flow of any liquid is directed into cylinder 2.

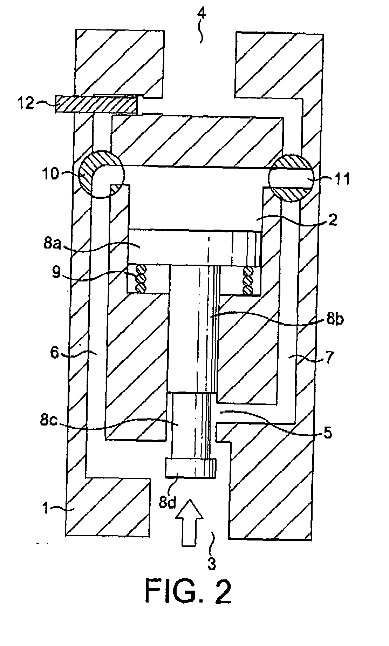

If the mechanism is attached to a source of pressurized liquid the pressure forces the liquid from inlet orifice 3 via inlet channel 6 into cylinder 2. In doing so the liquid pushes piston head 8a towards piston orifice 5 thus compressing spring 9. It is necessary for the liquid to have a minimum pressure of 0.5 bars so as to overcome the force of spring 9. When piston head 8a has assumed its final position close to piston orifice 5 as shown in Figure 2 the flow to outlet valve 11 is free as piston seal 8d no longer blocks front outlet channel 7a. The volume of liquid now located in cylinder 2 is referred to as the fixed volume of liquid.

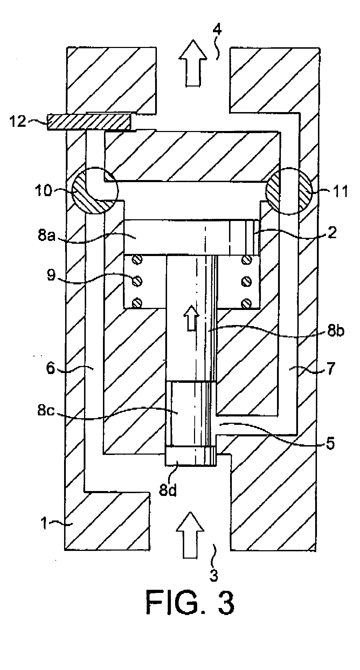

In order to dispense the liquid, the operator engages a trigger which simultaneously switches trigger valve 10 and opens outlet valve 11 as shown in Figure 3. In this position the liquid can flow freely from inlet orifice 3 to outlet orifice 4 via outlet channel 7. This flow of liquid via outlet channel 7 is referred to as the discharge flow. At the same time piston 8 is pushed back into its initial position by the action of spring 9 and by the pressure of the liquid against piston seal 8d. As a result the fixed volume of liquid flows from cylinder 2 to outlet orifice 4 via rear inlet channel 6b and throttle valve 12. The speed with which the fixed volume of liquid is discharged is dependent on the setting of the throttle valve 12 and on the pressure of the liquid. These two factors determine the time it takes for the fixed volume of liquid to be discharged from cylinder 2. The pressure of the liquid past throttle valve 12 should be as small as possible so that it does not become a factor in determining the time it takes for the fixed volume of liquid to be discharged from cylinder 2.

The predetermined volume is consequently the sum of the volume of liquid that is dispensed in the discharge flow and the fixed volume of liquid. The volume of liquid that is dispensed in the discharge flow is determined by the time it takes for the fixed volume of liquid to be discharged from cylinder 2. The time can be conveniently adjusted by adjusting throttle valve,12. For example, if throttle valve 12 is fully opened then the fixed volume of liquid will be dispensed quickly and thus only a small volume of liquid will be dispensed in the discharge flow. In this situation almost all liquid discharged by the present device will be the fixed volume of liquid itself. If by contrast throttle valve 12 is tightly closed then the fixed volume of liquid will be dispensed slowly and thus a large volume of liquid will be dispensed in the discharge flow. In this situation almost all liquid discharged by the present device will stem from the discharge flow. Any position between the two extremes will serve to discharge a volume between those achieved in the extreme settings of throttle valve 12. When the pressure of the liquid.is between 1 to 5 bars, different pressures of the liquid still result in the essentially same amount of liquid being discharged at the same setting of throttle valve 12.

After the predetermined volume of liquid, as determine by the setting of throttle valve 12 and the pressure of the liquid, has been discharged the operator can release the trigger which switches trigger valve 10 back to its initial setting and closes outlet valve 11. If the trigger is released before the fixed volume of liquid has been discharged then the flow of the liquid is interrupted by the settings of trigger valve 10 and outlet valve 11 and the cycle resumes at the stage of filling up cylinder 2 with liquid.

The mechanism of the present invention does not only cover the mechanism drawn with the ratios of the elements as shown the Figures but extends to mechanisms where the ratios of the elements are selected differently as adapted to other liquids.

Furthermore, the mechanism of the present invention does not only cover the mechanism as shown the Figures but extends to mechanisms in which the concept of using a timer to control the volume dispensed from a pressurised source is employed. In particular, mechanisms which employ one or more of the further elements: the use of a piston and cylinder assembly to act as a timer; the use of a liquid as a damping mechanism; the use of a liquid to reset the timer.

The size of the various components and the diameters of the various channels and orifices are suitably chosen to reflect the kind of liquid to be dispensed (e.g. the viscosity of the liquid forming an important consideration), the pressure with which the liquid is supplied, the amounts of liquid required for metering and other factors such as how this device might be incorporated into a dispensing system. The mechanism is suitable for any liquid with has a low viscosity and is essentially free of particles. For example, the mechanism can be used to deliver fuel additives to batches of fuel, to deliver vaccination liquids for animals and to deliver beverages or fluid nutrients into containers prior to packaging.

Block 1 may also include additional features such as a permanent fixture attached to inlet orifice 3 and/or to outlet orifice 4. Advantageously such a fixture or fixtures essentially extend inlet orifice 3 and/or outlet orifice 4 and allow the liquid dispensing device to be connected to other equipment. An example for a permanent fixture is a screw fixture. This allows the other equipment to be connected and disconnected as required. The equipment to be used in connection with present liquid dispensing device then require a complimentary fixture, in this example a nut fixture, in order to be connected to block 1. For example, the liquid from a pressurised source could to be connected to inlet orifice 3 by connecting a hose leading off a pump which is fitted with such a nut fixture to the screw fixture at inlet orifice 3.

In one embodiment the present device is used as an agricultural liquid dispensing device. The size of block 1 is chosen so that it can conveniently be held by the operator. The range of liquids to be dispensed is preferably from 10 to 1000 ml. The range of pressures at which the liquid need to be delivered is preferably between 1 to 5 bars. The diameters of the channels and orifices are chosen to be suitable for dispensing liquids which are used routinely as agricultural liquids. For example, they can be agricultural liquids containing one or more crop protection agent, such as one or more herbicides, one or more fungicides or one or more insecticides, and/or agricultural liquids containing a fertiliser. The advantage for the operator is that the agricultural liquid can be applied as a "spot application". That means rather than applying the agricultural liquid to a whole crop, in particular the foliage, as is usual when using conventional spraying methods, here the operator can applying the liquid at the base of the plant, if it is desirable to do so.

The spot application of agricultural chemicals, for instance the application of liquid to the base of each plant, is useful as this limits the amount of agricultural liquid wasted, for example, by spraying an active ingredient which is best taken up by the roots of a plant falling on to the foliage where the uptake is limited. Spot application of agricultural chemicals is thus an environmentally friendly way of applying chemicals. One example of agricultural products that is particularly suitable for spot application is the insecticide Actara^{™}. Actara^{™} has been shown to have very beneficial effects when applied to the base of, for example, coffee plants.

Conventionally spot application has been achieved in a labour intensive fashion, for example, the operator might have been required to measure out the liquid into a measuring jug and then to pour the metered liquid at the base of the plant. Also there are liquid dispensing devices which deliver a predetermined volume, for example, as described in US 4,650,099 and US 4,821,927. However, these liquid dispensing devices can only deliver the liquid within a narrow range of predetermined volumes from 1 to 20 ml. These devices are characterised in that the liquid is first measured in an adjustable dosing container. Then when the trigger is engaged the liquid is forced out by a piston. The amount of liquid the can be dispensed by this kind of mechanism is limited to small volumes. By contrast, as was highlighted above, the present device is capable of repeatedly metering out volumes of up to 1000 ml.

The liquid dispensing device can be used in conjunction with a knapsack sprayer. Knapsack sprayers are commonly used in agriculture. They comprise a tank in which the operator fills with the agricultural liquid, typically volumes of up to 30 litres which can be easily carried by the operator, and a means of pressurizing the liquid. Inexpensive versions of knapsack sprayers typically rely on the pressure to be generated by the operator; typically the operator can generate a continuous pressure of 1 to 3 bars which is exerted on the agricultural liquid.

Alternatively, the liquid dispensing device can be used in conjunction with a tank. Tanks are commonly used in agriculture to carry agricultural liquids in volumes of up to 5000 litres. The tanks can have multiple access points for individual operators to attach their equipment. For example six operators might use a single tank as a source of pressurized liquid to feed into their individual spray heads or lances. Mechanical pumps are typically used in conjunction with such tanks to exert the pressures of typically 3 to 5 bars on the agricultural liquid.

In one embodiment the liquid dispensing device further comprises a filter which is situated near or at inlet orifice 3. The filter can be connected to block 1 permanently or can be detachable from block 1. Filters are commonly used in agriculture to avoid blockage of spray heads and lances. In this instance, the liquid spraying device itself is also vulnerable to blockage by any particles introduced through the agricultural liquid. It is advantageous if the filter is readily detachable so as to allow the operator to exchange or clean the filter if a blockage occurs. In the case that the filter is detachable such a connection can be accomplished as mentioned previously via a permanent screw fixture attached to block 1. The filter would require a complimentary fixture, such as a nut fixture, in order for it to be connected to block 1. Another method of fixing the filter near or at inlet orifice 3 is to house the filter in a filter attachment which in turn can be attached to block 1 to assist facile assembly and disassembly of the filter. For example, the filter attachment could be made of a block of metal the dimensions of which match the dimensions of block 1 and again essentially extent inlet orifice 1. The filter attachment could then be attached to block 1 by one or more screws. The filter attachment in turn may also include additional features such as a permanent fixture, such as a screw fixture. Advantageously such a fixture essentially further extends inlet orifice 3 and allows the liquid dispensing device to be connected to other equipment.

In another embodiment the liquid dispensing device further comprises a lance which is situated near or at outlet orifice 4. The lance can be connected to block 1 permanently or can be detachable from block 1. In the case that the lance is detachable such a connection can be accomplished as mentioned previously via a permanent screw fixture attached to block 1. The lance would require a complimentary fixture, such as a nut fixture, in order for it to be connected to block 1. Lances are commonly used in agriculture to allow the operator to apply the agricultural liquid at a safe distance to himself. Lances are typically 80-120 cm in length. It is advantageous if the lance itself has a control valve at the tip of the lance (that is the end opposite to the side which is connected to block 1) to avoid run-off of the liquid. This additional feature ensures further improves operator safety and also increases the precision of the metering process.

## Claims

1. A device for dispensing a predetermined amount of liquid which is supplied to the device under pressure, in which the amount of liquid dispensed by the device is determined by a timer.

2. A device according to claim 1 in which the timer keeps the outlet valve open for a predetermined length of time thus determining the amount of liquid to be dispensed by the device.

3. A device according to claim 1 or claim 2 in which the timer comprises a piston moving within a cylinder whose speed of movement from an opening position in which the outlet valve is open to a closing position in which it closes the outlet valve is controlled by a damping mechanism.

4. A device according to claim 3 in which the damping mechanism is a liquid which is pumped by the piston through an orifice.

5. A device according to claim 3 or claim 4 in which the damping mechanism is adjustable so as to vary the damping effect.

6. A device according to claim 4 in which the size of the orifice is adjustable so as to vary the damping effect.

7. A device according to claim 6 in which the size of the orifice is adjusted by means of a throttle valve.

8. A device according to any one of claims 3 to 7 in which the piston is biased towards the closing position by a biasing means.

9. A device according to claim 8 in which the biasing means is a spring.

10. A device according to claim 8 or claim 9 in which the piston can be moved against the biasing means by liquid pressure so as to move it to the opening position.

11. A device according to claim 10 in which the pressure is that of the liquid supplied to the device.

12. A device according to any one of claims 1 to 11 in which the liquid is an agricultural liquid.

13. A device according to any one of claims 1 to 12 in which the device further comprises a filter.

14. A device according to claim 13 in which the filter is detachable.

15. A device according to any one of claims 1 to 14 in which the device further comprises a lance.

16. A device according to claim 15 in which the lance has a control valve at the tip of the lance so as to avoid run-offof the liquid.
